# EUROPEAN PATENT APPLICATION

(11) **EP 2 581 262 A1**
(43) Date of publication of application: **17.04.2013**
(21) Application number: 12184627.3
(22) Date of filing: 17.09.2012
(51) Int. Cl.: B60N 3/10, E02F 9/08

(54) **Interior cover for construction machine**

(30) Priority: 13.10.2011 JP 2011225492
(71) Applicant: Kobelco Construction Machinery Co., Ltd., Hiroshima 731-5161 (JP)
(72) Inventor: Kitagawa, Tomohito, Hiroshima, Hiroshima 731-5161 (JP); Nagase, Seiji, Hiroshima, Hiroshima 731-5161 (JP)
(74) Representative: TBK

(57) **Abstract**

Provided is an interior cover covering a device near an operator's seat and having an article holding section capable of discharging a foreign substance while preventing the foreign substance from attaching the device. The interior cover comprises: a cover body covering the device from a side of the operator's seat and being formed with a concave portion opened toward the side of the operator's seat; and a holding member attached to the cover body so as to cover a lower region of the concave portion to form, in cooperation with the concave portion, an article holding section for holding an article. The article holding section has a bottom wall for placing the article thereon. The holding member is attached to the cover body so as to form an outlet for discharging a foreign substance on the bottom wall toward the side of the operator's seat.

## Description

### BACKGROUND OF THE INVENTION

### 1. Field of the Invention

The present invention relates to an interior cover to be provided in a construction machine such as an excavator having an operator's seat so as to cover a device adjacent to the operator's seat from a side of the operator's seat.

### 2. Description of the Background Art

In a construction machine such as an excavator having an operator's seat, there is provided an interior cover to cover a device adjacent to the operator's seat from a side of the operator's seat. It is convenient for an operator that this type of interior cover includes a section for holding an article such as a beverage container.

As a technique related to the above construction machine interior cover, JP 2005-313749A discloses a panel member as an interior cover provided in a working vehicle at a position adjacent to an operator' seat, the panel member having a concave portion configured as a beverage container. Specifically, the panel member has an approximately horizontal portion formed with a concave portion having a downward concaved shape capable of receiving therein a beverage container such as a PET bottle or a drinking flask. The concave portion has a bottom provided with a discharge hole through which a foreign substance such as water or dust collected on the bottom can be discharge to the outside.

However, if such a configuration of the panel member was applied to the above type of construction machine interior cover, that is, an interior cover for covering a device adjacent to an operator's seat from a side of the operator's seat, there would occur the following problem: if the interior cover was formed with a concave portion having a discharge hole, water or dust discharged from the discharge hole to the outside of the interior cover, i.e., toward a side opposite to the side of the operator's seat, could attach onto the device covered with the interior cover, thus having a possibility of exerting an adverse influence on the device, particularly, an electric component such as an electric wiring or switch.

As measures against this problem, there would be connecting a tube to the discharge hole to discharge a foreign substance to the outside of the machine; however, this involves such problems as structural complication and occurrence of the necessity of a new burdensome maintenance operation, e.g., removing a foreign substance or replacing the tube with a new one when the tube is clogged with the foreign substance.

### SUMMARY OF THE INVENTION

It is an object of the present invention to provide an interior cover to be provided in a construction machine having an operator's seat so as to cover a device adjacent to the operator's seat from a side of the operator's seat, the interior cover having an article holding section capable of holding an article and discharging a foreign substance in the article holding section to the outside while preventing the foreign substance from attaching to the device, involving no remarkable structural complication and no necessity of a new burdensome maintenance operation.

The interior cover of the present invention comprises: a cover body covering the device from the side of the operator's seat and being formed with a concave portion opened toward the side of the operator's seat; and a holding member attached to the cover body so as to cover a lower region of the concave portion to form, in cooperation with the concave portion, an article holding section for holding an article. The article holding section has a bottom wall for placing the article thereon. The holding member is attached to the cover body so as to form an outlet through which a foreign substance on the bottom wall is discharged toward the side of the operator's seat.

### BRIEF DESCRIPTION OF THE DRAWINGS

FIG. 1 is a partially cutaway side view of an excavator provided with an interior cover according to one embodiment of the present invention.
FIG. 2 is a perspective view of an inside of a cabin of the excavator.
FIG. 3 is an assembled perspective view of the interior cover.
FIG. 4 is a disassembled perspective view of the interior cover.
FIG. 5 is an enlarged sectional view taken along the line V-V in FIG. 3.
FIG. 6 is an enlarged sectional view taken along the line VI-VI in FIG. 5.
FIG. 7 is an enlarged sectional view of a bottom wall and an adjacent region thereof shown in FIG. 6.

### DESCRIPTION OF THE PREFERRED EMBODIMENTS

With reference to the drawings, there will be described one embodiment of the present invention. This embodiment will be illustrated with an example of an excavator having a cabin, the cabin accommodating an operator's seat, an air-conditioning device and an interior cover covering the air-conditioning device from a side of the operator's seat, the interior cover including an article holding section for holding a container such as a PET bottle, or other article.

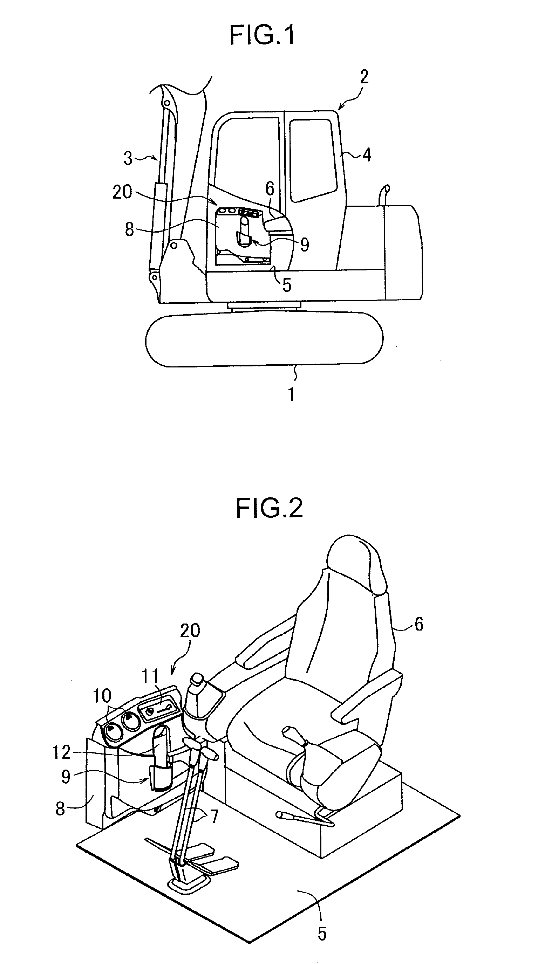

FIG. 1 shows the excavator. This excavator comprises a crawler type lower propelling body 1, an upper slewing body 2 slewably mounted on the lower propelling body 1, a working attachment 3 installed to a front portion of the upper slewing body 2, and a cabin 4 disposed behind the working attachment 3.

FIG. 2 shows an inside of the cabin 4. This cabin 4 accommodates a floor 5, an operator's seat 6 provided on the floor 5, a working lever 7 located at the front side of the operator's seat 6, a non-shown air-conditioning device disposed adjacent to the operator's seat 6 (in this embodiment, at a position rightward and frontward of the operator's seat 6), and an interior cover 20 which covers the air-conditioning device from the side of the operator's seat 6. The interior cover 20 comprises a cover body 8 formed of a plastic material or the like, and a holding member 13 for making up an article holding section 9 in cooperation with the cover body 8. The article holding section 9, which is configured, for example, as a container holder for holding a beverage container, is provided in a region, of an obverse surface of the cover body 8, adjacent to the operator's seat (reachable by an operator seated in the operator's seat).

As used in this specification, the term "obverse side surface" of the interior cover 20 or the cover body 8 means a surface on the obverse side, that is, on the side of the operator's seat 6, in other words, a surface facing an internal space of the cabin 4 in which the operator's seat 6 is located; specifically, in the layout shown in FIG. 2, the term "obverse surface" means a left surface in a right-left direction when viewed from an operator seated in the operator's seat 6.

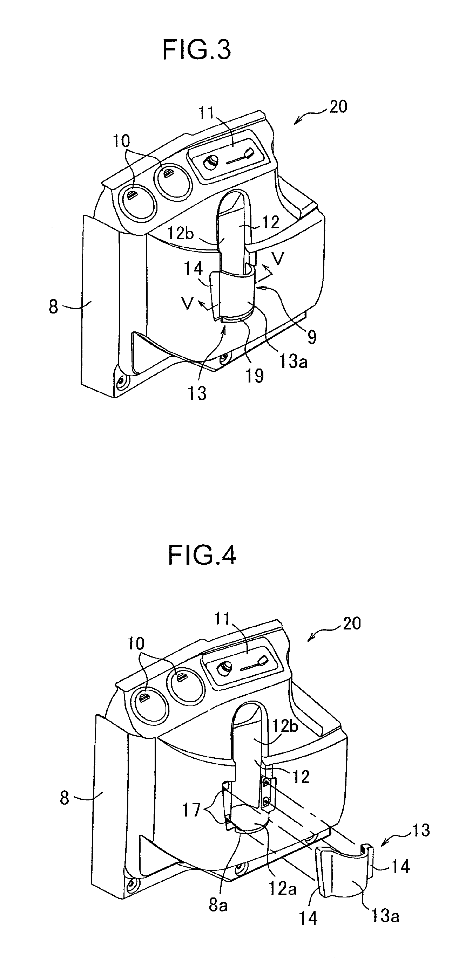

The cover body 8 is formed as a panel entirely bulged toward the obverse side thereof, as shown in FIGS. 3 to 6, and adapted to be attached to an inner surface of a sidewall of the cabin 4 by means of screw fastening or the like, while covering an air-conditioning device including air-conditioning ducts and electric wirings. In an upper region of the obverse surface thereof the cover body 8, there is provided a component associated with the air-conditioning device, such as an air outlet 10 and an air-conditioning control switch panel 11 shown in FIGS. 3 and 4. Furthermore, in an intermediate region of the obverse surface of the cover body 8, there is formed a vertically-long concave portion 12 constituting the article holding section 9 so as to be opened toward the obverse side.

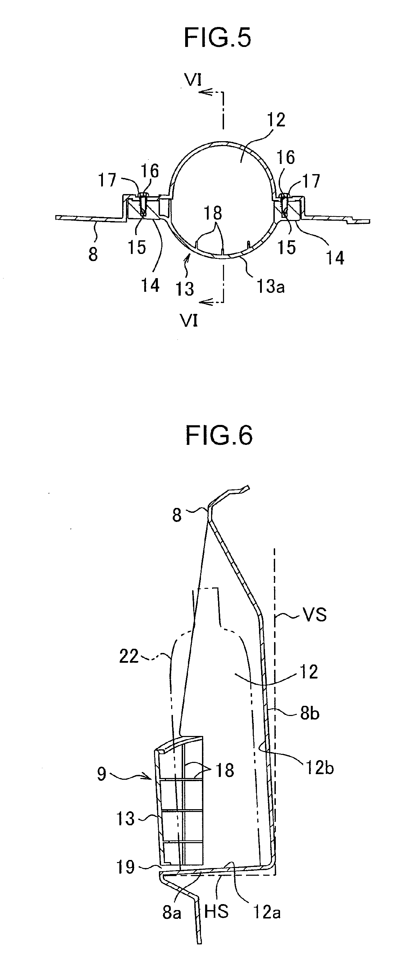

The concave portion 12 has a semicircular shape in horizontal cross-section, as shown in FIG. 5, to allow a target article (in this embodiment, a cylindrical-shaped container (e.g., beverage container) 22 as shown in FIG. 6) to be received therein in a vertically standing posture with an appropriate clearance therebetween. Specifically, as shown in FIG. 6, the cover body 8 has a back wall 8b located at a position depressed toward a reverse side of the cover body 8 more deeply than a remaining portion thereof, and a bottom wall 8a protruding from the back wall 8b toward the obverse side of the cover body 8 to serve as a bottom wall of the article holding section 9. The back wall 8b has an obverse surface which serves as a back surface 12b of the concave portion 12, and the bottom wall 8a has an upper surface which serves as a bottom surface 12a of the concave surface 12. The back surface 12b has a semicircular shape in horizontal cross-section, and the bottom wall 8a has a generally circular shape in plan view.

The holding member 13 is a plate-shaped member formed of a plastic material or the like, and attached to the cover body 8 so as to cover a lower region of the concave portion from the obverse side, thereby making up the article holding section 9 in cooperation with the cover body 8. The holding member 13 comprises a holding member body 13a for constraining the article from the obverse side, and a pair of attachment portions 14.

The holding member body 13a has a reverse surface (i.e., inner surface) of a semicircular shape in horizontal cross-section to allow the reverse surface of the holding member body 13a and the obverse surface (i.e., back surface) of the concave portion 12 to define a generally circular-shaped receiving space. The reverse surface of the holding member body 13a has a rib 18 protruding therefrom and extending horizontally and vertically, as shown in FIG. 5.

The attachment portions 14 are located on widthwise opposite outer ends of the holding member body 13a, respectively, and integrally joined to the holding member body 13a. Each of the attachment portions 14 has a wall thickness greater than that of the holding member body 13a. Each of the attachment portions 14 is formed with a plurality of (e.g., upper and lower) attachment holes 15 each being opened toward only the reverse side, in other words, each being a bottomed hole closed at the obverse side. On the other hand, the cover body 8 is provided with a plurality of through-holes 16 in the same number as that of the attachment holes 15 and at respective portions corresponding to the attachment holes 15, on both sides of a lower region of the concave portion 12. Into the attachment holes 15 are inserted and screwed a plurality of attachment screws 17 respectively, from a reverse surface side of the cover body 8; thus, the holding member 13 is fixed to the cover body 8 so as to cover a lower region of the concave portion 12 from the obverse side. Each of the attachment holes 15 may be a simple bottomed hole having a cylindrical-shaped inner peripheral surface in which the attachment screw 17 screwed into the bottomed hole forms a thread, or may be an internally-threaded screw hole formed to be screwed with the attachment screw 17.

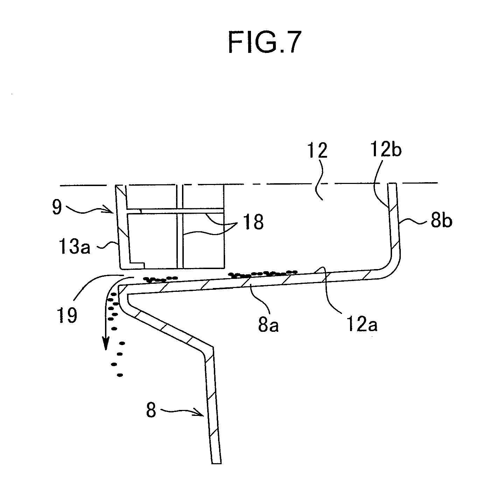

The holding member 13 is attached to the cover body 8 so as to define a gap 19 serving as an outlet, between a lower end of the holding member 13 and the bottom surface of the concave portion 12 which is the upper surface of the bottom wall 12a. The gap 19, when an inside of the concave portion 12 is cleaned by use of a cloth or brush, allows a foreign substance, such as water or dust, collecting on the bottom surface 12a of the concave portion 12 (as indicated by black dots in FIG. 7) to be swept out toward the obverse side, that is, toward the internal space of the cabin 4 (the side of the operator's seat 6), via the gap 19.

Furthermore, in order to assist discharge of the foreign substance, the bottom surface 12a of the concave portion 12 is formed as a surface inclined to extend gently obliquely downwardly toward the obverse side, as is clear from comparison with a horizontal surface HS shown in FIG. 6. While the inclination of the bottom surface 12a of the concave portion 12 brings the container 22 received in the article holding section 9 into a posture tilted toward the obverse side, the back surface 12b of the concave portion 12 is inclined in conformity to this posture, that is, the back surface 12b is displaced toward the obverse side with a distance which increases in a direction toward an upper end thereof to prevent the inclined posture from enlarging a gap between the back surface 12b and the container 22, thereby preventing an increase in amplitude of wobbling of the container 22 from occurring due to the enlargement of the gap. More specifically, the back surface 12b in this embodiment is formed as a surface inclined to extend obliquely upwardly toward the obverse side, while forming a right angle with respect to the bottom surface 12a, as is clear from comparison with a vertical surface VS shown in FIG. 6.

The article holding section 9 of the interior cover 20 discharges a foreign substance, such as water or dust, collecting on the bottom surface 12a of the concave portion 12 not a side of a device (in this embodiment, the air-conditioning device) but toward the obverse side, i.e., the side of the operator's seat 6, thus having no risk of exerting an adverse influence on the device, particularly, an electric component. Besides, the discharge requires no tube for leading the foreign substance to the outside, not involving remarkable structural complication. The discharged foreign substance can be received by a waste container, or can be dropped on a floor mat (not graphically shown) put on the floor 5 in FIG. 2 and cleaned together with the mat. Particularly as to a floor mat used for the construction machine, the mat is usually apt to get dirty due to mud and therefore frequently cleaned, thus allowing a foreign substance to be directly dropped on the floor mat with no actual disadvantage.

The article holding section 9 of the interior cover 20 according to this embodiment further exerts the following advantageous effects.
(i) The cover body 8 includes the bottom wall 8a forming the bottom surface of the concave portion 12, thus not involving such a trouble as can be caused in the case of a bottom plate extending from the holding member 13a to be butted against the back surface 12b of the concave portion 12 to serve as the bottom wall, that is, a trouble that a foreign substance enters a gap in a butted region between the bottle plate and the back surface 12b.
(ii) The holding member 13, which is adapted to be attached to the cover body 8 so as to define the gap 19 serving as an outlet for discharging a foreign substance between the holding member body 13 and the bottom surface 12a of the concave portion 12, can facilitate removal of a foreign substance and can be easily formed, for example, as compared to the case of providing a discharging hole in a lower end region of the holding member 13. Particularly in the case of the gap defined over the entire widthwise range of the bottom surface 12a, the removal of a foreign substance is more ensured.
(iii) The bottom surface 12a of the concave portion 12, being inclined so as to extend obliquely downwardly toward the obverse side, promotes discharge of a foreign substance. Particularly, a foreign liquid substance such as water can be naturally flowed down along the bottom surface 12a to be automatically discharged. Furthermore, the inclination of the back surface 12b of the concave portion 12 in combination with that of the bottom surface 12a of the concave portion 12 suppresses an increase in gap between the back surface 12b and the container 22 received in the concave portion 12 and, as a result, an increase in amplitude of wobbling of the container 22.
(iv) Each of the back surface 12b of the concave portion 12 and the inner surface of the holding member 13, having a semicircular shape in horizontal cross-section to cooperatively surround a receiving space having a circular shape in horizontal cross-section, is able to stably hold a cylindrical-shaped container such as a PET bottle or a cup while suppressing a wobbling movement thereof. Besides, absence of edges in the back surface 12 and the inner surface of the holding member 13 permits the article holding section 9 to be easily cleaned.
(v) As shown in FIG. 5, each of the attachment holes 15 formed in the attachment portions 14 of the holding member 13 is opened toward only the reverse side while receiving the attachment screw 17 inserted thereinto from the reverse side of the cover body to allow the holding member 13 to be attached to the cover body 8, thus preventing the attachment screw 17 from exposition to the obverse side. This enables the originally designed appearance of the interior cover 20 to be maintained.

The present invention is not limited to the above embodiment, but may include the following modifications.
(1) It is not essential that the back surface 12b of the concave portion 12 intersects at a right angle with respect to the bottom surface 12a. For example, the back surface 12b may be a surface inclined to extend obliquely upwardly toward the obverse side so as to form an angle less than or greater than a right angle with respect to the bottom surface 12a. Alternatively, the back surface 12b may be vertical surface. Besides, the bottom surface 12a may be a horizontal surface, and, in this case, the back surface 12b may be a vertical surface or a surface slightly inclined toward the obverse side or the reverse side with respect to the vertical surface.
(2) Means for the attachment of the holding member 13 to the cover body 8 is not limited to the attachment screw 17. For example, it may be a combination of an elastically deformable protruding piece provided to one of the cover body 8 and the holding member 13, and an engagement hole provided to the other so as to be engaged with the protruding piece involving an elastic deformation in the protruding piece.
(3) The bottom wall of the article holding section may be formed in the holding member to be butted against the back surface of the concave portion.
(4) The interior cover according to the present invention is not limited to a type for covering an air-conditioning device within a cabin, but may be a type for covering any other component near the operator's seat 6. Besides, a target article to be held by the article holding section formed in the interior cover is not limited to a beverage container, but may be, for example, a writing material, a small document, or a small object such as a coin. Respective shapes of the concave portion 12 and the holding member 13 can be set dependently on a shape of the target article. For example, the horizontal cross-sectional shape of the holding space defined by the concave portion 12 and the holding member 13 may be a shape other than the aforementioned circular shape such as a quadrangular shape or an oblong shape.
(5) A construction machine to which the interior cover according to the present invention is to be provided is not limited to an excavator having a cabin. The present invention may be widely applied to an excavator with no cabin, and any construction machine other than an excavator.

As described above, the present invention provides an interior cover to be provided in a construction machine having an operator's seat so as to cover a device adjacent to the operator's seat from a side of the operator's seat, the interior cover having an article holding section capable of holding an article and discharging a foreign substance in the article holding section to the outside while preventing the foreign substance from attaching to the device, involving no remarkable structural complication and no necessity of a new burdensome maintenance operation. The interior cover of the present invention comprises: a cover body covering the device from the side of the operator's seat and being formed with a concave portion opened toward the side of the operator's seat; and a holding member attached to the cover body so as to cover a lower region of the concave portion to form, in cooperation with the concave portion, an article holding section for holding an article. The article holding section includes a bottom wall for placing the article thereon. The holding member is attached to the cover body so as to form an outlet through which a foreign substance on the bottom wall is discharged toward the side of the operator's seat.

According to the interior cover, an article such as a beverage container can be inserted into the concave portion formed in the cover body and placed on the bottom wall, thus being allowed to be held by the cover body and the holding member attached to the cover body. Besides, a foreign substance, such as water or dust, collecting on the bottom surface is discharged toward not the side of the device but the side of the operator's seat, with no possibility of exerting an adverse influence on the device, particularly, an electric component. In addition, the discharge requires no tube for leading a discharged foreign substance to an outside the construction machine, thus involving no remarkable structural complication. The discharged foreign substance can be received by another waste container, or can be dropped on a floor mat adjacent to the operator's seat and cleaned together with the floor mat. Particularly as to a floor mat used for a construction machine, the mat is usually apt to get dirty due to mud and therefore frequently cleaned, thus allowing a foreign substance to be directly dropped on the floor mat with no actual disadvantage.

The bottom wall, while being permitted to be formed in the holding member according to the invention, is preferably formed in the cover body so as to have an upper surface serving as a bottom surface of the concave portion. The thus formed bottom wall in the cover body to serves as the bottom surface of the concave portion does not involve such a trouble as can be caused in the case of a bottom wall formed in the holding member to be butted against the back surface of the concave portion, that is, a trouble that a foreign substance is likely to enter a gap in a butted region between the bottle wall and the back surface.

In this case, it is more preferable that the holding member is attached to the cover body so as to define a gap serving as the outlet between a lower end of the holding member and the bottom surface of the concave portion. The thus defined outlet, namely, the gap, allows a foreign substance to be discharged more smoothly than, for example, an outlet of a horizontally-long hole formed in a lower end of the holding member. In addition, the holding member can be easily formed.

Besides, the article holding section preferably has a bottom surface inclined so as to extend obliquely downwardly toward an obverse side, i.e., the side of the operator's seat, which allows a foreign substance to be discharged more smoothly. Particularly a combination of a) the gap as the outlet defined between the lower end of the holding member and the bottom surface of the concave portion and b) the inclination of the bottom surface oblique downward toward the side of the operator's seat makes the discharge of a foreign substance be smoother. Particularly a foreign liquid substance such as water can be naturally flowed down along the bottom surface to be automatically discharged.

In conjunction with the inclination of the bottom surface obliquely downward toward the side of the operator's seat, the concave portion, more preferably, has a back surface inclined to extend obliquely upwardly toward the side of the operator's seat. Although the inclination of the bottom surface oblique downward toward the side of the operator's seat brings an article placed on the bottom into a posture tilted toward the side of the operator's seat, the inclination of the back surface of the concave portion in conformity to the tilted posture suppresses an increase in a gap between the back surface and the article from increasing due to the tilted posture of the article, thereby preventing an increase in amplitude of wobbling of the container due to vibration.

In the invention, it is preferable that each of the back surface of the concave portion and the reverse surface of the holding member is formed in a semicircular shape in horizontal cross-section to cooperatively surround a space having a circular shape in horizontal cross-section. Their respective shapes allow the concave portion and the holding member to stably hold a cylindrical-shaped article such as a PET bottle or a cup, while suppressing a wobbling movement thereof. In addition, absence of edges in the back surface and the reverse surface allows the article holding section to be easily cleaned.

For the attachment of the holding member to the cover body, it is preferable that the holding member integrally includes a holding member body for constraining the article from an obverse side of the cover body and respective attachment portions on widthwise opposite ends of the holding member body, each of the attachment portions being formed with an attachment hole opened toward only a reverse side of the cover body, the holding member being fixed to the cover body by an attachment screw screwed into the attachment hole from the reverse side of the cover body while penetrating through the cover body. The attachment screws thus screwed into the attachment hole can fix the holding member to the cover body without their expositions to the obverse side of the cover body, i.e., without exerting an adverse influence on originally designed appearance of the interior cover.

This application is based on Japanese Patent application No. 2011-225492 filed in Japan Patent Office on October 13, 2011, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

Provided is an interior cover covering a device near an operator's seat and having an article holding section capable of discharging a foreign substance while preventing the foreign substance from attaching the device. The interior cover comprises: a cover body covering the device from a side of the operator's seat and being formed with a concave portion opened toward the side of the operator's seat; and a holding member attached to the cover body so as to cover a lower region of the concave portion to form, in cooperation with the concave portion, an article holding section for holding an article. The article holding section has a bottom wall for placing the article thereon. The holding member is attached to the cover body so as to form an outlet for discharging a foreign substance on the bottom wall toward the side of the operator's seat.

## Claims

1. An interior cover to be provided in a construction machine having an operator's seat so as to cover a device adjacent to the operator's seat from a side of the operator's seat, the interior cover comprising:
a cover body covering the device from the side of the operator's seat, the cover body being formed with a concave portion opened toward the side of the operator's seat; and
a holding member attached to the cover body so as to cover a lower region of the concave portion and form, in cooperation with the concave portion, an article holding section for holding an article, the article holding section having a bottom wall for placing the article thereon, the holding member being attached to the cover body so as to form an outlet for discharging a foreign substance on the bottom wall toward the side of the operator's seat.

2. The interior cover as defined in claim 1, wherein the bottom wall is formed in the cover body so as to have an upper surface which serves as a bottom surface of the concave portion.

3. The interior cover as defined in claim 2, wherein the holding member is attached to the cover body so as to define a gap serving as the outlet between a lower end of the holding member and the bottom surface of the concave portion.

4. The interior cover as defined in claim 1, wherein the article holding section has a bottom surface inclined so as to extend obliquely downwardly toward the side of the operator's seat.

5. The interior cover as defined in claim 4, wherein the concave portion has a back surface inclined so as to extend obliquely upwardly toward the side of the operator's seat.

6. The interior cover as defined in claim 3, wherein the article holding section has a bottom surface inclined so as to extend obliquely downwardly toward the side of the operator's seat.

7. The interior cover as defined in claim 6, wherein the concave portion has a back surface inclined so as to extend obliquely upwardly toward the side of the operator's seat.

8. The interior cover as defined in claim 1, wherein the concave portion has a back surface and the holding member has a reverse surface, each of the back surface and the reverse surface having a semicircular shape in horizontal cross-section so as to cooperatively surround a space having a circular shape in horizontal cross-section.

9. The interior cover as defined in claim 1, wherein the holding member integrally includes a holding member body for constraining the article from an obverse side of the cover body and respective attachment portions located on widthwise opposite ends of the holding member body, each of the attachment portions being formed with an attachment hole opened toward only a reverse side of the cover body to allow an attachment screw screwed into the attachment hole from the reverse side while penetrating through the cover body to fix the holding member to the cover body.
